# EUROPEAN PATENT SPECIFICATION

(11) **EP 3 491 937 B1**
(45) Date of publication and mention of the grant of the patent: **28.02.2024**
(21) Application number: 17834393.5
(22) Date of filing: 26.07.2017
(51) Int. Cl.: A23L 27/00, A23L 27/10

(54) **LIQUID SEASONING AGENT CONTAINING SOLID INGREDIENTS**
FLÜSSIGES WÜRZMITTEL MIT FESTEN INHALTSSTOFFEN
AGENT D'ASSAISONNEMENT LIQUIDE CONTENANT DES INGRÉDIENTS SOLIDES

(30) Priority: 27.07.2016 JP 2016147437
(43) Date of publication of application: 05.06.2019
(73) Proprietor: Mizkan Holdings Co., Ltd., Handa-shi, Aichi 475-8585 (JP); Mizkan Co., Ltd., Handa-shi, Aichi 475-8585 (JP)
(72) Inventor: WATANABE, Seiji, Handa-shi Aichi 475-8585 (JP); TAKASE, Ryosuke, Handa-shi Aichi 475-8585 (JP)
(74) Representative: Mewburn Ellis LLP
(86) International application number: PCT/JP2017/026995
(87) International publication number: WO 2018/021391

(56) References cited:
- JP-A- H10 327 794
- JP-A- S56 117 751
- JP-A- 2007 236 213
- JP-A- 2007 236 213
- JP-A- 2012 170 353
- JP-A- 2012 170 353
- MARTIN-DIANA ET AL: "Calcium for extending the shelf life of fresh whole and minimally processed fruits and vegetables: a review", TRENDS IN FOOD SCIENCE AND TECHNOLOGY, ELSEVIER SCIENCE PUBLISHERS, GB, vol. 18, no. 4, 16 March 2007 (2007-03-16) , pages 210-218, XP005938676, ISSN: 0924-2244, DOI: 10.1016/J.TIFS.2006.11.027
- RANJITHA K ET AL: "Effect of pretreatments and modified atmosphere packaging on the shelf life and quality of fresh- cut green bell pepper", JOURNAL OF FOOD SCIENCE AND TECHNOLOGY, SPRINGER (INDIA) PRIVATE LTD, INDIA, vol. 52, no. 12, 23 July 2015 (2015-07-23) , pages 7872-7882, XP035965698, ISSN: 0022-1155, DOI: 10.1007/S13197-015-1928-7 [retrieved on 2015-07-23]
- LUNA-GUZMAN I ET AL: "Comparison of calcium chloride and calcium lactate effectiveness in maintaining shelf stability and quality of fresh-cut cantaloupes", POSTHARVEST BIOLOGY AND TECHNOLOGY, ELSEVIER, NL, vol. 19, 1 January 2000 (2000-01-01), pages 61-72, XP002587705, ISSN: 0925-5214
- MARTIN-DIANA A.B . et al.: "Calcium for extending the shelf life of fresh whole and minimally processed fruits and vegetables: a review.", Trends in Food Science & Technology, vol. 18, 2007, pages 210-218, XP005938676,
- RANJITHA K. et al.: "Effect of pretreatments and modified atmosphere packaging on the shelf life and quality of fresh-cut green bell pepper.", J Food Sci Technol, vol. 52, no. 12, 2015, pages 7872-7882, XP035557930,

## Description

### Technical Field

The present invention relates to a liquid condiment containing a vegetable ingredient.

### Background Art

Conventionally, a liquid condiment such as a sauce is not only eaten by being put on or applied to a food, but used by a consumer with adding grated Japanese radish, spring onion, sesame, or the like. When it is desired to add solid ingredients to a liquid condiment in this manner, those solid ingredients must be prepared every time the condiment is used. In order to save such an effort of addition, condiments to which grated vegetables such as grated Japanese radish are added, and condiments are commercially available in which granular ingredients such as sesame and mustard seed are dispersed. In addition, liquid condiments are also commercially available in which finely chopped vegetables such as onion and garlic are dispersed therein.

As for such liquid condiments in which solid ingredients such as vegetables are blended, a technique of using a grated vegetable and a dry vegetable in combination as solid ingredients (Patent Literature 1), a technique of adding vegetable particles to seasoning liquid in a particular viscosity range with stirring under the stirring condition of a particular speed (Patent Literature 2), a technique of adding α starch to seasoning liquid to form a viscous seasoning liquid, and then mixing a solid ingredient and the like (Patent Literature 3), and the like are reported. Further, a technique of mixing a granular dry vegetable into seasoning liquid as it is, without previously swelling it with water, in order to impart a good texture of the solid ingredient and a feeling of presence of the solid ingredient (Patent Literature 4), and a technique of using a large amount of a dry vegetable and a thickening agent (Patent Literature 5) are proposed. Meanwhile, a method is known in which a vegetable is impregnated with a saline solution or the like in advance and then the vegetable is impregnated with a calcium salt or magnesium salt aqueous solution before heating or freezing the vegetable in order to prevent the softening of the vegetable after retort sterilization and after thawing treatment (Patent Literature 6).

JP 2012-170353 A concerns a seasoning comprising dehydrated vegetables and a thickener wherein the weight of dehydrated vegetables is 6-19% on a dry basis and 60-98% on a wet basis, by total weight. MARTIN-DIANA ET AL, "Calcium for extending the shelf life of fresh whole and minimally processed fruits and vegetables: a review", TRENDS IN FOOD SCIENCE AND TECHNOLOGY, ELSEVIER SCIENCE PUBLISHERS, 2007, vol. 18, no. 4, provides a comprehensive review of the use of different sources of calcium to preserve fresh fruits and vegetables in order to extend the shelf life and enhance the nutritional value.

### Citation List

### Patent Literature

Patent Literature 1: JP-A-hei 11-000130
Patent Literature 2: JP-A-hei 8-317772
Patent Literature 3: JP-A-2004-254633
Patent Literature 4: JP-A-2007-209295
Patent Literature 5: JP-A-2012-170353
Patent Literature 6: JP-A-hei 10-327794

### Summary of Invention

### Technical Problem

However, the texture of a solid ingredient such as a vegetable, particularly hardness, a sense of eating a solid, fresh chewiness, etc. specific to vegetable, is not sufficiently maintained after immersion in seasoning liquid and storage by the conventional means. In addition, when chewiness is weak regardless of containing a large amount of solid ingredients, such a condiment is by no means satisfactory because the texture can be felt poorer all the more for the weak chewiness, and a sense of eating a solid is not realized.

Therefore, it is an object of the present invention to provide a solid ingredient-containing liquid condiment in which while a large amount of a vegetable of a particular size is contained as a solid ingredient, hardness, a sense of eating a solid, and fresh chewiness specific to the vegetable are sufficiently felt even after storage for a long period. Solution to Problem

The present inventor has extensively studied the size of a solid ingredient used as a raw material, its treatment, and seasoning liquid, and further the physical properties, etc. of the seasoning liquid after the immersion of the solid ingredient, and found that when, in addition to the size of a solid ingredient and its content and the Brix and pH of seasoning liquid, the calcium content in the seasoning liquid of a liquid condiment is adjusted in a particular range, a solid ingredient-containing liquid condiment can be obtained, in which hardness, a sense of eating a solid, and fresh chewiness of the solid ingredient are sufficiently felt even after the solid ingredient is immersed in the seasoning liquid and maintained for a long period, thereby leading to the completion of the present invention.

The invention is set out in the appended set of claims.

### Advantageous Effects of Invention

In the solid ingredient-containing liquid condiment of the present invention, hardness, a sense of eating a solid, and fresh chewiness of the solid ingredient can be felt even after the solid ingredient is immersed in the seasoning liquid for a long period. The solid ingredient-containing liquid condiment of the present invention contains a particular amount of fiber derived from the solid ingredient, and thus sufficient sense of eating a solid and fresh chewiness can be felt, and fiber derived from the solid ingredient can be taken.

### Description of Embodiments

The solid ingredient-containing liquid condiment of the present invention is a solid ingredient-containing liquid condiment containing a vegetable as a solid ingredient immersed in seasoning liquid, wherein
(1) the liquid condiment contains the solid ingredient passing through a 3-mesh sieve and not passing through an 8-mesh sieve, in an amount of from 10 to 55% by mass of the whole liquid condiment on a wet basis,
(2) the Brix of the seasoning liquid in the liquid condiment is from 1 to 40,
(3) the pH of the seasoning liquid in the liquid condiment is from 2 to 5, and
(4) the calcium content in the seasoning liquid of the liquid condiment is from 0.05 to 0.25% by mass.

The solid ingredient which can be blended into the liquid condiment of the present invention preferably includes a vegetable, in terms of texture, chewiness, and the like. The solid ingredient may include a fish, a meat, a mushroom, a seaweed, a fruit, and the like in addition to the vegetable.

Examples of the vegetable used as the solid ingredient in the present invention include root vegetables, leafy vegetables, beans, and seeds. Specifically, examples thereof include carrot, onion, cabbage, green pepper, Japanese radish, beet, lotus root, burdock, spring onion, perilla, celery, parsley, paprika, tomato, cucumber, corn, Chinese cabbage, cauliflower, lettuce, spinach, Japanese mustard spinach, rape, bok choy, Chinese chive, turnip greens, eggplant, potato, sweet potato, taro, yam, pumpkin, garlic, ginger, Japanese ginger, red pepper, and the like.

Among these, vegetables containing a relatively large amount of fiber are preferable, such as carrot, onion, cabbage, green pepper, paprika, tomato, cucumber, and celery, in terms of maintaining the texture of a fresh vegetable.

Among the vegetables, a leafy vegetable is preferably contained in terms of imparting a sense of eating a solid and fresh chewiness. The leafy vegetable is a vegetable whose leaf portions are mainly used for food. Specific examples include cabbage, Chinese cabbage, parsley, celery, spring onion, onion, lettuce, spinach, Japanese mustard spinach, rape, bok choy, Chinese chive, and turnip greens. Among these, it is preferable to contain one or more selected from the group consisting of cabbage, Chinese cabbage, celery, and onion in terms of imparting a sense of eating a solid.

In the present invention, these solid ingredients have sizes passing through a 3-mesh sieve and not passing through an 8-mesh sieve after being immersed in the seasoning liquid. Use of the solid ingredients having such sizes in a liquid condiment imparts a sense of eating vegetable sufficiently. The solid ingredient not passing through a 3-mesh sieve has too large size, and therefore its use as a liquid condiment is restricted, and one may feel it hard to eat it. The solid ingredient passing through an 8-mesh sieve may not sufficiently impart a sense of eating vegetable.

Here, the solid ingredient passing through a 3-mesh sieve and not passing through an 8-mesh sieve means the solid ingredient passing through a 3-mesh sieve and remaining on an 8-mesh sieve when the solid ingredient-containing liquid condiment is fractionated by sieves having different openings. The mesh is a unit representing the density of openings of a wire net, a sieve, a filter, or the like and represents the number of meshes per inch. The thickness of the wire and the interval between the openings are defined by the JIS standard (JIS-Z8801). In the present invention, for the solid ingredient in a wet state, the respective solid ingredient weights of one not passing through 3 mesh, one passing through 3 mesh and not passing through 8 mesh, and one passing through 8 mesh and not passing through 100 mesh are measured. Specifically, 100 g of a sample to be measured is equally spread on sieves stacked from above in the order of 3 mesh, 8 mesh, and 100 mesh, and allowed to stand for 10 minutes, and then the value of the weight of the residue on each sieve expressed in percent by weight in the liquid condiment is measured.

For the content of the vegetable in the solid ingredient, when multiple solid ingredients are contained, after fractionation by sieves, the wet weight of the solid ingredients is measured, and then the solid ingredients are visually classified by the type of solid ingredient, the wet weight is measured, and % by mass in the liquid condiment is measured. The content of the leafy vegetable in the solid ingredient is measured by the proportion (% by mass) of the wet weight of the leafy vegetable to the weight of the solid ingredient before classification.

In the present invention, in terms of imparting a sense of eating a solid and dispersibility of the solid ingredient, it is important that the solid ingredient of the particular size be contained in an amount of from 10 to 55% by mass of the whole liquid condiment on a wet basis. When the content of the solid ingredient is less than 10% by mass, a sense of eating a solid is insufficient. When the content of the solid ingredient is more than 60% by mass, the application of the condiment is restricted.

The content of the solid ingredient in the whole liquid condiment is 10% by mass or more, preferably 15% by mass or more, and further preferably 20% by mass or more and 55% by mass or less, and preferably 50% by mass or less in terms of imparting a sense of eating a solid and the usability of the condiment.

The solid ingredient in the liquid condiment of the present invention preferably has breaking stress of from 1.4 × 10⁶ to 8 × 10⁶ N/m², more preferably from 2 × 10⁶ to 7 × 10⁶ N/m², and further preferably from 2.6 × 10⁶ to 6 × 10⁶ N/m² at ordinary temperature (from 15°C to 25°C) in terms of imparting excellent feeling of the presence of solid and imparting fresh chewiness.

In order to perform evaluation when the liquid condiment of the present invention was stored for a long period, the liquid condiment was stored at 50°C for 4 days for the purpose of forcefully deteriorating the liquid condiment, and then set at ordinary temperature, and the hardness and texture of the solid ingredient were evaluated. For a control test, the hardness and texture of the solid ingredient were evaluated for the liquid condiment stored at 5°C for 4 days and then set at ordinary temperature. Retention of the hardness of the solid ingredient was evaluated by calculating the proportion of breaking stress of the solid ingredient stored at 50°C and then set at ordinary temperature, in relation to breaking stress of the solid ingredient stored at 5°C and then set at ordinary temperature. The retention rate of breaking stress when the liquid condiment is stored at 50°C for 4 days and then set at ordinary temperature is preferably 30% or more, more preferably 40% or more, and further preferably 50% or more, in terms of chewiness and a sense of eating a solid.

The breaking stress in the present invention can be measured by using a rheometer. Specifically, a vegetable ingredient having a thickness of about 5 mm is maintained in seasoning liquid at 5°C or 50°C for 4 days and then set at ordinary temperature, the vegetable ingredient is separated from the seasoning liquid, and the hardness is measured by using a rheometer (manufactured by YAMADEN co., ltd., product name: RHEONER II CREEP METER RE-2-3305S). For the measurement conditions, the breaking stress (unit: N/m²) is measured at a penetration speed of 1 mm/s with the thickness of the solid ingredient being penetration depth, by using a plunger (1 × 5 mm) .

For the retention rate of breaking stress described above, a retention rate of breaking stress (%) is obtained according to the following equation:
retention rate of breaking stress (%) = b/a × 100 wherein 'a' is breaking stress of a vegetable ingredient stored at 5°C for 4 days and 'b' is breaking stress of the vegetable ingredient stored at 50°C for 4 days.

The amount of fiber derived from the solid ingredient passing through a 3-mesh sieve and not passing through an 8-mesh sieve, in the liquid condiment of the present invention is preferably from 0.1 to 8% by mass, more preferably from 0.5 to 5% by mass, and further preferably from 0.8 to 5% by mass in terms of the chewiness of the solid ingredient, and taking dietary fiber as much as possible being desired.

The content of fiber derived from the solid ingredient in the present invention is a value obtained by calculating the weight of the fiber in the solid ingredient in terms of % by mass of the weight of the whole liquid condiment. The amount of fiber in the solid ingredient is measured by an enzyme-weight method (modified Prosky method) with the total of soluble dietary fiber and insoluble dietary fiber being the total dietary fiber. Specifically, the amount of fiber in the solid ingredient when the content of the solid ingredient passing through a 3-mesh sieve and not passing through an 8-mesh sieve described above is measured is measured, and the amount of fiber based on the mass of the whole liquid condiment is expressed in % by mass.

In the liquid condiment of the present invention, a vegetable is preferably used as the solid ingredient, and from 1 to 100% by mass of a leafy vegetable is preferably contained in the solid ingredient on a wet basis in terms of obtaining fresh chewiness. The content of the leafy vegetable in the solid ingredient is more preferably from 10 to 100% by mass, further preferably from 10 to 90% by mass in the solid ingredient. For the thickness of the leafy vegetable, the maximum values of the thicknesses of cut vegetable pieces are measured, and the thickness is specified by the average value for 20 pieces. The thickness of the leafy vegetable is preferably from 0.5 to 6 mm in terms of chewiness and a sense of eating a solid, more preferably from 1.5 to 6 mm, and further preferably from 2.5 to 6 mm.

The vegetable used as the solid ingredient in the liquid condiment of the present invention is preferably a dry vegetable in terms of maintaining the hardness of the solid ingredient and making chewiness good. The drying method for the dry vegetable is not particularly limited, and examples thereof include hot air drying, freeze drying, drying by heating under reduced pressure, and microwave drying. A dry vegetable having a water content of 10% by mass or less is more preferred, a dry vegetable having a water content of 7.5% by mass or less is more preferred, and a dry vegetable having a water content of 6% by mass or less is further preferred.

For the dry vegetable, before drying, the vegetable is preferably mixed with a sugar or immersed in a solution comprising a sugar for preparation in terms of maintaining the hardness of the solid ingredient and making chewiness better. Examples of the sugar include glucose, fructose, sucrose, lactose, and starch decomposition products, and two or more may be used. The amount of the sugar added, the mixing time, and the concentration, the heating and mixing temperature and time in the case of immersion in the sugar solution, and the temperature and time of the following drying should be arbitrarily selected according to the type and size of the vegetable, and the like. The amount added in the case of mixing with the sugar is preferably from 5 to 30% by mass based on the solid ingredient, the concentration of the sugar in the case of immersion in the solution is preferably from 5 to 30% by mass, and the conditions of heating and mixing in the solution are preferably from 50 to 80°C and from 10 minutes to 12 hours.

Examples of the calcium-containing dry vegetable of the present invention include one obtained by heating and mixing a cut vegetable in a solution of a calcium salt and drying it. Use of the above calcium-containing dry vegetable serves to maintaining the hardness of the solid ingredient and the sense of eating a solid and it is all the more preferable in terms of providing excellent chewiness. In the method for preparing the above calcium-containing dry vegetable, the concentration of the calcium salt solution, the heating temperature, and the temperature and time of the following drying may be arbitrarily selected according to the type and size of the vegetable, and the like. Specifically, a cut vegetable may be stirred in an aqueous solution in which a calcium salt such as calcium chloride, calcium lactate, or calcium acetate is dissolved in water at from 0.5 to 5% by mass, at from 50 to 80°C for from 1 to 120 minutes, separated from the treatment liquid, drained, and then dried at from 65 to 80°C for from 3 to 12 hours. From 5 to 30% by mass of a sugar such as glucose, fructose, sucrose, or lactose is preferably contained in the above calcium aqueous solution in terms of further maintaining the hardness of the solid ingredient.

The Brix of the seasoning liquid in the liquid condiment of the present invention is from 1 to 40 in terms of imparting fresh chewiness. When the Brix is less than 1, fresh chewiness is not sufficiently imparted. When the Brix is more than 40, the solid ingredient is dehydrated, and thus a fresh texture is not imparted. The Brix is preferably from 5 to 35, more preferably from 10 to 30, and further preferably from 15 to 25. The adjustment of Brix can be performed by the blending of a sugar-containing component into the seasoning liquid.

The pH of the seasoning liquid in the liquid condiment is from 2 to 5 in terms of texture maintenance. When the pH is less than 2, it is difficult to keep the texture during storage. When the pH is more than 5, excessive heat sterilization is necessary, and therefore it is difficult to keep the texture. The pH is preferably from 2.5 to 4.5, more preferably from 3 to 4.

The acetic acid concentration of the seasoning liquid in the liquid condiment is preferably from 0.05 to 2% by mass, more preferably from 0.1 to 1.75% by mass, and further preferably from 0.5 to 1.5% by mass in terms of the maintenance of texture. The adjustment of pH and acetic acid concentration is preferably performed by the content of vinegar.

The acetic acid concentration can be measured by high performance liquid chromatography and is the acetic acid content in the seasoning liquid measured.

In the seasoning liquid in the liquid condiment of the present invention, in addition to the Brix and pH as described above, it is important that the calcium content be from 0.05 to 0.25% by mass, in terms of sufficiently maintaining the hardness of the solid ingredient and imparting a sense of eating a solid and a fresh texture. When the calcium content in the seasoning liquid of the liquid condiment is less than 0.03% by mass, the calcium content is insufficient to maintain the hardness of the solid ingredient for a long period, and the chewiness is also weak, and when it is more than 0.25% by mass, the acrid taste and bitter taste of calcium are strongly felt, so it is unsuitable as a seasoning liquid. Preferred calcium content is from 0.05 to 0.20% by mass, and most preferably from 0.09 to 0.20% by mass.

Here, the calcium content can be measured according to the atomic absorption method by dry ashing described in STANDARD TABLES OF FOOD COMPOSITION IN JAPAN -2015-(Seventh Revised Version). The adjustment of the calcium content in the seasoning liquid can be performed by the addition of a calcium salt such as calcium chloride, calcium lactate, calcium carbonate, calcium acetate, calcium citrate, calcium L-glutamate, calcium oxide, calcium hydroxide, calcium stearate, calcium sorbate, calcium pantothenate, calcium dihydrogen pyrophosphate, 5'-ribonucleotide calcium, calcium sulfate, calcium monohydrogen phosphate, calcium dihydrogen phosphate, or tricalcium phosphate, or the like.

Also other than the addition of the above calcium compound, one or more of a calcium-containing food and a food-derived calcium material can also be used so as to obtain the calcium content. Specific examples of the calcium-containing food include seeds such as sesame and almond, or processed products, such as defatted, dried, powdered, or fined products, of the seeds. Alternatively, specific examples of the calcium-containing food include fish and shellfish such as saurel, sardine, whitebait, sand lance, pond smelt, dried small sardine, and shrimp, seaweeds such as Hizikia fusiforme, kelp, wakame seaweed, sea lettuce, and green laver, or processed products, such as dried, powdered, or fine products, of the fish and shellfish or seaweeds. Alternatively, specific examples of the calcium-containing food include dairy products such as milk, whole milk powder, skim milk powder, cheese, milk serum, and whey. Specific examples of the food-derived calcium material include milk calcium, calcium-containing yeast, calcium-containing lactic acid bacteria, eggshell calcium, and seashell calcium. Among the above, defatted sesame, Hizikia fusiforme, seaweed powder, milk calcium, calcium-containing yeast, and calcium-containing lactic acid bacteria are preferred in terms of flavor.

When the calcium-containing food is used, calcium previously dissolved from the food may be used, or calcium may be dissolved and used during the liquid condiment production process. The dissolution method is not particularly limited, but usually calcium is preferably dissolved in an acid solution, and from the viewpoint of use in the liquid condiment, calcium is preferably dissolved in vinegar.

Water, salt, soy sauce, spice, a protein material, an organic acid, an amino acid-based condiment, a nucleic acid-based condiment, animal and plant extracts, a fermented condiment, an alcoholic beverage, a stabilizer, a colorant, a viscosity-adjusting agent, and the like can be contained in the seasoning liquid of the solid ingredient-containing liquid condiment of the present invention, and the Brix, pH, and calcium content are adjusted. In addition to the above, a salt may be contained; such as a sodium salt, a potassium salt, a magnesium salt, an aluminum salt, a copper salt, and a zinc salt. Specific examples include magnesium chloride, aluminum chloride, and alum.

The solid ingredient-containing liquid condiment of the present invention can be produced by immersing the solid ingredient in the seasoning liquid as described above.

That is, by immersing in seasoning liquid a solid ingredient containing a vegetable passing through a 3-mesh sieve and not passing through an 8-mesh sieve such that the amount of the solid ingredient is from 10 to 55% by mass of the whole liquid condiment on a wet basis, and adjusting the Brix to from 1 to 40, pH to from 2 to 5, and calcium content of the seasoning liquid in the liquid condiment to from 0.05 to 0.25% by mass, a solid ingredient-containing liquid condiment can be produced in which the retention rate of the breaking stress of the solid ingredient in the liquid condiment is 30% or more. The Brix, pH, and calcium content in the seasoning liquid in the liquid condiment are values in the seasoning liquid portion after solid ingredient-containing liquid condiment production.

The solid ingredient-containing liquid condiment of the present invention imparts a feeling of the presence of the solid ingredient, and hardness, realization of eating a solid, and a fresh texture specific to the solid ingredient. Therefore, the solid ingredient-containing liquid condiment of the present invention can be used, for example, for seasoned vinegar, sauce, stock sauce, and other any kind of liquid seasonings. Specifically, the solid ingredient-containing liquid condiment of the present invention can be used for sushi vinegar, a condiment for natto (Japanese fermented soybeans), a condiment for hotpot, a condiment for noodle, a condiment for rice, a condiment for pot-cooked rice, a condiment for starchy sauce, a condiment for yakiniku (grilled meat), a condiment for prepared food, a condiment for chirashi-zushi (sushi where topping is scattered on a bed of vinegared rice), a condiment for tofu (soybean curd), a condiment for hiyashi-chuka (chilled Chinese noodles), a condiment for fried rice, a condiment for tendon (a bowl of rice topped with tempura), sesame sauce, a condiment for Jiaozi (Chinese dumpling), a condiment for marinated food, a condiment for a Hamburg steak, a condiment for a steak, a condiment for a saute, a condiment for use in a microwave oven, a condiment for salad, a condiment for Korean soft tofu, a condiment for stir-fry, a condiment for Japanese pilaf, a condiment for rice cooked with various solid ingredients, a condiment for kimchi (Korean pickle), a condiment for somen (Japanese thin wheat noodle), a condiment for deep-fried food, a condiment for ramen noodle, a condiment for stew, a condiment for shabu-shabu (hotpot dish with thin sliced meat parboiled in hot soup), a condiment for dip, and a condiment for pasta, and the like. The liquid condiment of the present invention is useful particularly for topping condiments used by being put on foodstuffs, and is particularly preferably used as a condiment for tofu (soybean curd), a condiment for prepared food, a condiment for salad, a condiment for starchy sauce, a condiment for deep-fried food, a condiment for a Hamburg steak, a condiment for a steak, or a condiment for a saute.

### Examples

Next, the present invention will be described in detail by Examples.

### (Examples)

### Examples 1 and 2

Carrot pieces cut into dice were added to seasoning liquid prepared according to Table 1, and the mixture was sterilized by heating at 85°C for 30 seconds. The mixture was cooled to 65°C, then filled into a sterilization container, and stored at 5°C and 50°C for 4 days. The pH, Brix, acetic acid concentration (% by mass), and calcium content (% by mass) of the seasoning liquid of the obtained solid ingredient-containing liquid condiment, the content of the solid ingredient not passing through a 3-mesh sieve (% by mass), the content of the solid ingredient passing through a 3-mesh sieve and not passing through an 8-mesh sieve (% by mass), the content of the solid ingredient passing through an 8-mesh sieve and not passing through a 100-mesh sieve (% by mass), the breaking stress (N/m²) and breaking stress retention rate (%) of the solid ingredient, the amount of fiber (% by mass) in the solid ingredient-containing liquid condiment, and the results of sensory evaluation are shown in Table 1.

### < Measurement Method of Vegetable Ingredient Hardness >

A vegetable ingredient having a thickness of about 5 mm was maintained in seasoning liquid at 5°C or 50°C for 4 days and then separated from the seasoning liquid, and the hardness was measured by using a rheometer (manufactured by YAMADEN Co., Ltd., product name: RHEONER II CREEP METER TE-2-3305S). For the measurement conditions, the breaking stress (unit: N/m²) was measured at a penetration speed of 1 mm/s with the thickness of the solid ingredient being penetration depth, by using a plunger (1 × 5 mm).

### < Calculation Method of Retention Rate >

The retention rate of the breaking stress (%) was given by the following equation:
retention rate of breaking stress (%) = b/a × 100 wherein 'a' is breaking stress of a vegetable ingredient stored at 5°C and then set at ordinary temperature and 'b' is breaking stress of the vegetable ingredient stored at 50°C and then set at ordinary temperature.

### Texture and Flavor Evaluation of Carrot

For the sensory evaluation of the carrot in the obtained solid ingredient-containing condiment, the evaluation was performed by a total of four trained sensory examiners according to the following evaluation criteria.

### <Texture of Carrot>

the carrot has crunchy and fresh chewiness ... 5 points
the carrot has crunchy chewiness ... 4 points
the carrot slightly has chewiness ... 3 points
chewiness is weak ... 2 points
the carrot is limp and has no chewiness ... 1 point

### <Sense of Eating a Solid Regarding Solid Ingredient-Containing Condiment>

The sense of eating a solid was evaluated according to the following evaluation criteria, when 10 g of the solid ingredient-containing condiment was eaten at one time.
4 the condiment imparted a sense of eating a solid, and a feeling of the presence of a solid ingredient
3 the condiment imparted a sense of eating a solid
2 the condiment slightly failed in imparting a sense of eating a solid
1 the condiment failed in imparting a sense of eating a solid

### Example 3

Carrot pieces cut into dice were placed in a 20% by mass white soft sugar solution, stirred at 60°C for 5 seconds every 15 minutes, and treated for 60 minutes. Next, the treated carrot pieces were added to seasoning liquid in Table 1, and the mixture was stored, as in Example 1. Similarly, the results are shown in Table 1.

### Example 4

Carrot pieces cut into dice were placed in a solution of 20% by mass of white soft sugar and 1% by mass of calcium lactate, stirred at 60°C for 5 seconds every 15 minutes, and treated for 60 minutes.

Next, the treated carrot pieces were added to seasoning liquid in Table 1, and the mixture was stored, as in Example 1. Similarly, the results are shown in Table 1.

### Comparative Examples 1 and 2

Carrot pieces cut into dice were added to seasoning liquid prepared according to Table 1, and the mixture was heat-sterilized at 85°C for 30 seconds. The mixture was cooled to 65°C, then filled into a sterilization container, and stored at 5°C and 50°C for 4 days. Similarly, the results are shown in Table 1.

### Comparative Example 3

Carrot pieces cut into dice were treated as in Example 3, and then the carrot pieces were added to seasoning liquid in Table 1, and the mixture was stored, as in Example 1. Similarly, the results are shown in Table 1.

### Comparative Example 4

Carrot pieces cut into dice were treated as in Example 4, and then the carrot pieces were added to seasoning liquid in Table 1, and the mixture was stored, as in Example 1. Similarly, the results are shown in Table 1.

### Example 5

Carrot pieces cut into dice were placed in a 20% by mass white soft sugar solution, stirred at 60°C for 5 seconds every 15 minutes, and treated for 60 minutes. The vegetable pieces were separated from the treatment liquid, drained, and then dried at 70°C for 5 hours.

Next, the obtained vegetable ingredient was added to seasoning liquid prepared according to Table 2, and the mixture was heat-sterilized at 85°C for 30 seconds. The mixture was cooled to 65°C, then filled into a sterilization container, and stored at 5°C and 50°C for 4 days. The pH, Brix, acetic acid concentration (% by mass), and calcium content (% by mass) of the seasoning liquid of the obtained solid ingredient-containing liquid condiment, the content of the solid ingredient not passing through a 3-mesh sieve (% by mass), the content of the solid ingredient passing through a 3-mesh sieve and not passing through an 8-mesh sieve (% by mass), the content of the solid ingredient passing through an 8-mesh sieve and not passing through a 100-mesh sieve (% by mass), the breaking stress (N/m²) and breaking stress retention rate (%) of the solid ingredient, the amount of fiber (% by mass) in the solid ingredient-containing liquid condiment, and the results of sensory evaluation are shown in Table 2.

### Examples 6 and 7

Carrot pieces cut into dice were placed in a solution of 20% by mass of white soft sugar and 1% by mass of calcium lactate, stirred at 60°C for 5 seconds every 15 minutes, and treated for 60 minutes. The vegetable pieces were separated from the treatment liquid, drained, and then dried at 70°C for 5 hours. Next, the obtained vegetable ingredient was added to seasoning liquid prepared according to Table 2, and the mixture was sterilized by heating at 85°C for 30 seconds. The mixture was cooled to 65°C, then filled into a sterilization container, and stored at 5°C and 50°C for 4 days. Similarly, the results are shown in Table 2.

### Comparative Example 5

Carrot pieces cut into dices were added to a white soft sugar solution and then dried as in Example 5, and similarly, the carrot pieces were added to seasoning liquid according to Table 2, and the mixture was stored. Similarly, the obtained results are shown in Table 2.

### Comparative Examples 6 and 7

Carrot pieces cut into dices were added to a solution of white soft sugar and calcium lactate and then dried as in Example 6, and similarly, the carrot pieces were added to seasoning liquid according to Table 2, and the mixture was stored. Similarly, the results are shown in Table 2.

**[Table 1]**

| | | Examples | | | | Comparative Examples | | | |
|---|---|---|---|---|---|---|---|---|---|
| | | 1 | 2 | 3 | 4 | 1 | 2 | 3 | 4 |
| Seasoning liquid | | | | | | | | | |
| Formulation (% by mass) | | | | | | | | | |
| Brewed vinegar | | 3 | 3 | 3 | 3 | 3 | 3 | 3 | 3 |
| Fruit vinegar | | 8 | 8 | 8 | 8 | 8 | 8 | 8 | 8 |
| Liquid sugar | | 10 | 10 | 10 | 10 | 10 | 10 | 10 | 10 |
| Common salt | | 5 | 5 | 5 | 5 | 5 | 5 | 5 | 5 |
| White soft sugar | | 2.5 | 2.5 | 2.5 | 2.5 | 2.5 | 2.5 | 2.5 | 2.5 |
| Citric acid | | 1 | 1 | 1 | 1 | 1 | 1 | 1 | 1 |
| Calcium carbonate | | 0.25 | 0.5 | 0.25 | 0.25 | - | 0.05 | - | - |
| Water | | 70.25 | 70 | 70.25 | 70.25 | 70.5 | 70.45 | 70.5 | 70.5 |
| pH | | 3.57 | 3.96 | 3.55 | 3.51 | 2.48 | 2.77 | 2.36 | 2.53 |
| Brix | | 15.9 | 15.8 | 16.7 | 16.9 | 15.8 | 15.8 | 16.7 | 16.7 |
| Acetic acid concentration (% by mass) | | 0.7 | 0.74 | 0.71 | 0.7 | 0.7 | 0.71 | 0.69 | 0.7 |
| Calcium content (% by mass) | | 0.09 | 0.15 | 0.11 | 0.11 | <0.01 | 0.02 | <0.01 | 0.02 |

| Solid ingredient (carrot) | | | | | | | | | |
|---|---|---|---|---|---|---|---|---|---|
| Solid ingredient content (% by mass) | | | | | | | | | |
| Not passing through 3 mesh | | 0 | 0 | 0 | 0 | 0 | 0 | 55 | 0 |
| Passing through 3 mesh and not passing through 8 mesh | | 40 | 20 | 55 | 30 | 40 | 60 | 0 | 30 |
| Passing through 8 mesh and not passing through 100 mesh | | 0 | 40 | 0 | 0 | 0 | 0 | 0 | 0 |
| Breaking stress (N/m²) | (4°C storage) | 4.4×10⁶ | 3.0×10⁶ | 4.9×10⁶ | 5.0×10⁶ | 2.2×10⁶ | 2.7×10⁶ | 2.4×10⁶ | 5.0×10⁶ |
| Breaking stress (N/m²) | (50°C storage) | 3.5×10⁶ | 4.7×10⁶ | 5.1×10⁶ | 5.1×10⁶ | 2.4×10⁵ | 4.8×10⁵ | 4.0×10⁵ | 8.0×10⁵ |
| Breaking stress retention rate (%) | | 79 | 157 | 104 | 103 | 11 | 18 | 17 | 16 |

| Liquid condiment | | | | | | | | | |
|---|---|---|---|---|---|---|---|---|---|
| Amount of fiber (% by mass) | | 1.2 | 0.6 | 1.65 | 0.9 | 1.2 | 1.8 | 0 | 0.9 |
| <Sensory evaluation results> | | | | | | | | | |
| Solid ingredient texture (immediately after preparation) | | 4 | 4 | 5 | 5 | 2 | 3 | 3 | 4 |
| Solid ingredient texture (after storage at 50°C for 4 days) | | 4 | 4 | 4 | 5 | 1 | 1 | 1 | 2 |
| A sense of eating a solid ingredient | | 4 | 3 | 4 | 4 | 1 | 2 | 1 | 1 |

From Table 1, Examples 1 to 4 were liquid condiments which contained a particular amount of the solid ingredient passing through a 3-mesh sieve and not passing through an 8-mesh sieve in a wet state and in which the Brix, pH, acidity, and calcium content of the seasoning liquid were in particular ranges, and in Examples 1 to 4, even after long-term storage, little change in the hardness of the solid ingredient and excellent texture were observed, and a sense of eating a solid was realized.

In contrast, Comparative Examples 1 to 4 did not satisfy the conditions of the present invention, such as calcium content in the seasoning liquid being outside of the specific range, and in Comparative Examples 1 to 4, the hardness of the solid ingredient was not maintained, the texture was inferior, and a sense of eating a solid was not satisfactorily realized.

**[Table 2]**

| | | Examples | | | Comparative Examples | | |
|---|---|---|---|---|---|---|---|
| | | 5 | 6 | 7 | 5 | 6 | 7 |
| Seasoning liquid | | | | | | | |
| Formulation (% by mass) | | | | | | | |
| Brewed vinegar | | 3 | 3 | 4 | 3 | 3 | 4 |
| Fruit vinegar | | 8 | 8 | 8 | 8 | 8 | 8 |
| Liquid sugar | | 10 | 10 | 10 | 10 | 10 | 10 |
| Common salt | | 5 | 5 | 5 | 5 | 5 | 5 |
| White soft sugar | | 2.5 | 2.5 | 2.5 | 2.5 | 2.5 | 2.5 |
| Citric acid | | 1 | 1 | 4 | 1 | 1 | 4 |
| Calcium carbonate | | 0.25 | 0.25 | 0.25 | - | - | 0.25 |
| Water | | 70.25 | 70.25 | 66.25 | 70.5 | 70.5 | 66.25 |
| pH | | 3.53 | 3.55 | 2.46 | 2.43 | 2.58 | 2.46 |
| Brix | | 17.3 | 17.2 | 17.6 | 17.2 | 17.1 | 17.6 |
| Acetic acid concentration (% by mass) | | 0.71 | 0.71 | 0.7 | 0.71 | 0.7 | 0.7 |
| Calcium content (% by mass) | | 0.11 | 0.12 | 0.12 | <0.01 | 0.02 | 0.12 |

| Solid ingredient (carrot) | | | | | | | |
|---|---|---|---|---|---|---|---|
| Solid ingredient content (% by mass) | | | | | | | |
| Not passing through 3 mesh | | 0 | 0 | 0 | 0 | 0 | 0 |
| Passing through 3 mesh and not passing through 8 mesh | | 40 | 40 | 40 | 40 | 40 | 5 |
| Passing through 8 mesh and not passing through 100 mesh | | 0 | 0 | 0 | 0 | 0 | 35 |
| Breaking stress (N/m²) | (4°C storage) | 6.1×10⁶ | 6.1×10⁶ | 4.8×10⁶ | 2.5×10⁶ | 5.2×10⁶ | 4.8×10⁶ |
| Breaking stress (N/m²) | (50°C storage) | 5.3×10⁶ | 5.6×10⁶ | 3.6×10⁶ | 4.7×10⁵ | 1.3×10⁶ | 3.6×10⁶ |
| Breaking stress retention rate (%) | | 86 | 91 | 76 | 19 | 25 | 76 |

| Liquid condiment | | | | | | | |
|---|---|---|---|---|---|---|---|
| Amount of fiber (% by mass) | | 1.2 | 1.2 | 1.2 | 1.2 | 1.2 | 0.15 |
| <Sensory evaluation results> | | | | | | | |
| Solid ingredient texture (immediately after preparation) | | 5 | 5 | 4 | 3 | 4 | 4 |
| Solid ingredient texture (after storage at 50°C for 4 days) | | 4 | 5 | 3 | 1 | 2 | 3 |
| A sense of eating a solid ingredient | | 4 | 4 | 3 | 1 | 1 | 1 |

From Table 2, further, Examples 5 to 7 were liquid condiments in which after drying, the vegetable ingredient was impregnated with the seasoning liquid satisfying the conditions of the present invention, and in Examples 5 to 7, even after long-term storage, the change in the hardness of the solid ingredient was small, the texture was like that of a fresh vegetable and extremely good, and the sense of eating a solid was sufficient.

In contrast, in Comparative Examples 5 and 6, the seasoning liquid did not satisfy the conditions of the present invention though Comparative Examples 5 and 6 were liquid condiments in which the vegetable ingredient was impregnated with the seasoning liquid after drying, and in Comparative Examples 5 and 6, the hardness of the solid ingredient was not kept, and the texture and the sense of eating a solid were both unsatisfactory. In Comparative Example 7, a particular amount of solid ingredient size was not contained, and in Comparative Example 7, the sense of eating a solid was not satisfactory.

### Example 8

Cabbage pieces cut into cubes were placed in a 20% by mass white soft sugar solution, stirred at 60°C for 5 seconds every 15 minutes, and treated for 60 minutes. The vegetable pieces were separated from the treatment liquid, drained, and then dried at 70°C for 5 hours.

Next, the obtained vegetable ingredient was added to seasoning liquid prepared according to Table 3, and the mixture was heat-sterilized at 85°C for 30 seconds. The thickness of the cabbage separated from the solid ingredient-containing liquid condiment was from 0.5 to 4.2 mm. The solid ingredient-containing liquid condiment was cooled to 65°C, then filled into a sterilization container, and stored at 5°C and 50°C for 4 days. The pH, Brix, acetic acid concentration (% by mass), and calcium content (% by mass) of the seasoning liquid of the obtained solid ingredient-containing liquid condiment, the content of the solid ingredient not passing through a 3-mesh sieve (% by mass), the content of the solid ingredient passing through a 3-mesh sieve and not passing through an 8-mesh sieve (% by mass), the content of the solid ingredient passing through an 8-mesh sieve and not passing through a 100-mesh sieve (% by mass), the amount of fiber (% by mass) in the solid ingredient-containing liquid condiment, and the results of sensory evaluation are shown in Table 3.

### Comparative Example 8

Cabbage pieces cut into cubes were added to a white soft sugar solution and then dried as in Example 8, and similarly, the cabbage pieces were added to seasoning liquid according to Table 3, and the mixture was stored. The thickness of the cabbage separated from the solid ingredient-containing liquid condiment was 0.5 to 4.2 mm. Similarly, the results are shown in Table 3.

### Texture and Flavor Evaluation of Cabbage

For the sensory evaluation of the cabbage in the obtained solid ingredient-containing condiment, the evaluation was performed by a total of four trained sensory examiners according to the following evaluation criteria,
the cabbage has crisp and fresh chewiness ... 5 points
the cabbage has crisp chewiness ... 4 points
the cabbage has chewiness to some extent ... 3 points
the chewiness is weak ... 2 points
the cabbage is limp and has no chewiness ... 1 point

### <Sense of Eating a Solid Regarding Solid Ingredient-Containing Condiment>

Evaluation was performed according to evaluation criteria similar to those of <Sense of Eating a Solid Regarding Solid Ingredient-Containing Condiment> in the Examples 1 and 2.

**[Table 3]**

| | Example 8 | Comparative Example 8 |
|---|---|---|
| Seasoning liquid | | |
| Formulation (% by mass) | | |
| Brewed vinegar | 3 | 3 |
| Fruit vinegar | 8 | 8 |
| Liquid sugar | 10 | 10 |
| Common salt | 5 | 5 |
| White soft sugar | 2.5 | 2.5 |
| Citric acid | 1 | 1 |
| Calcium carbonate | 0.25 | - |
| Water | 70.25 | 70.5 |
| pH | 3.60 | 2.64 |
| Brix | 17.6 | 17.8 |
| Acetic acid concentration (% by mass) | 0.68 | 0.70 |
| Calcium content (% by mass) | 0.10 | <0.01 |

| Solid ingredient (cabbage) | | |
|---|---|---|
| Solid ingredient content (% by mass) | | |
| Not passing through 3 mesh | 0 | 0 |
| Passing through 3 mesh and not passing through 8 mesh | 40 | 40 |
| Passing through 8 mesh and not passing through 100 mesh | 0 | 0 |

| Liquid condiment | | |
|---|---|---|
| Amount of fiber (% by mass) | 0.72 | 0.72 |

| <Sensory evaluation results> | | |
|---|---|---|
| Solid ingredient texture (immediately after preparation) | 5 | 2 |
| Solid ingredient texture (after storage at 50°C for 4 days) | 5 | 1 |
| A sense of eating a solid ingredient | 4 | 1 |

From Table 3, Example 8 was a liquid condiment in which after drying, cabbage of a particular size which was a flat-shaped leafy vegetable was impregnated with the seasoning liquid satisfying the conditions of the present invention, and in Example 8, even after long-term storage, the change in the hardness of the solid ingredient was small, the texture was remarkably excellent and fresh like a fresh vegetable, and the sense of eating a solid was sufficient.

In contrast, in Comparative Example 8, the seasoning liquid did not satisfy the conditions of the present invention though Comparative Example 8 was a liquid condiment in which cabbage of a particular size was impregnated with the seasoning liquid after drying, and in Comparative Example 8, the hardness of the solid ingredient was not maintained, the texture was inferior, and the sense of eating a solid was not satisfactory.

### Example 9

Carrot pieces cut into dice were placed in a 20% by mass white soft sugar solution, stirred at 60°C for 5 seconds every 15 minutes, and treated for 60 minutes. The vegetable pieces were separated from the treatment liquid, drained, and then dried at 70°C for 5 hours to obtain a vegetable ingredient.

30 g of brewed vinegar, 80 g of fruit vinegar, 100 g of liquid sugar, 50 g of common salt, 25 g of white soft sugar, 10 g of citric acid, and 705 g of water were mixed to obtain a mixed liquid. Next, 10 g of calcium-containing yeast and 17 g of sesame meal were added to the above mixed liquid, and the mixture was stirred at 25°C for 60 minutes and then filtered through a filter to obtain seasoning liquid. Next, the vegetable ingredient was added to the above seasoning liquid such that the amount of the solid ingredient (% by mass) after swelling in the seasoning liquid was a content shown in Table 4. The mixture was heat-sterilized at 85°C for 30 seconds. The mixture was cooled to 65°C, then filled into a sterilization container, and stored at 5°C and 50°C for 4 days. The pH, Brix, acetic acid concentration (% by mass), and calcium content (% by mass) of the seasoning liquid of the obtained solid ingredient-containing liquid condiment, the content of the solid ingredient not passing through a 3-mesh sieve (% by mass), the content of the solid ingredient passing through a 3-mesh sieve and not passing through an 8-mesh sieve (% by mass), the content of the solid ingredient passing through an 8-mesh sieve and not passing through a 100-mesh sieve (% by mass), the breaking stress (N/m²) and breaking stress retention rate (%) of the solid ingredient, the amount of fiber (% by mass) in the solid ingredient-containing liquid condiment, and the results of sensory evaluation are shown in Table 4.

### Texture and Flavor Evaluation of Carrot

For the sensory evaluation of the carrot in the obtained solid ingredient-containing condiment, the evaluation was performed by a total of four trained sensory examiners according to the following evaluation criteria.

### <Texture of Carrot>

the carrot has crunchy and fresh chewiness ... 5 points
the carrot has crunchy chewiness ... 4 points
the carrot slightly has chewiness ... 3 points
chewiness is weak or the carrot is slightly hard... 2 points
either the carrot is limp and has no chewiness or the carrot is too hard ... 1 point

### <Sense of Eating a Solid Regarding Solid Ingredient-Containing Condiment>

The sense of eating a solid was evaluated according to the following evaluation criteria, when 10 g of the solid ingredient-containing condiment was eaten at one time.
4 the condiment imparted a sense of eating a solid, and a feeling of the presence of solid ingredient
3 the condiment imparted a sense of eating a solid
2 the condiment slightly failed in imparting a sense of eating a solid or the condiment was slightly hard to eat
1 the condiment failed in imparting a sense of eating a solid or the condiment was hard to eat

### Example 10

Operation was carried out as in Example 9 except that 18 g of calcium-containing yeast and 9 g of sesame meal were added to the mixed liquid, and the mixture was stirred at 25°C for 60 minutes and then filtered through a filter to obtain seasoning liquid.

### Example 11

Operation was carried out as in Example 9 except that 5 g of milk calcium was added to the mixed liquid, and the mixture was stirred at 25°C for 60 minutes and then filtered through a filter to obtain seasoning liquid.

### Example 12

Operation was carried out as in Example 9 except that 3 g of seaweed powder and 70 g of naga-hijiki were added to the mixed liquid, and the mixture was stirred at 25°C for 60 minutes and then filtered through a filter to obtain seasoning liquid.

**[Table 4]**

| | | Examples | | | | Comparative Example |
|---|---|---|---|---|---|---|
| | | 9 | 10 | 11 | 12 | 9 |
| pH | | 3.1 | 3 | 3.5 | 3.8 | 3.5 |
| Brix | | 15.7 | 16.9 | 17.6 | 16 | 15 |
| Acetic acid concentration (% by mass) | | 0.7 | 0.7 | 0.7 | 0.7 | 0.7 |
| Calcium content (% by mass) | | 0.06 | 0.10 | 0.12 | 0.10 | 0.10 |

| Solid ingredient (carrot) | | | | | | |
|---|---|---|---|---|---|---|
| Solid ingredient content (% by mass) | | | | | | |
| Not passing through 3 mesh | | 0 | 0 | 0 | 0 | 40 |
| Passing through 3 mesh and not passing through 8 mesh | | 40 | 40 | 40 | 40 | 0 |
| Passing through 8 mesh and not passing through 100 mesh | | 0 | 0 | 0 | 0 | 0 |
| Breaking stress(N/m²) | (4°C storage) | 5.5×10⁶ | 5.6×10⁶ | 5.6×10⁶ | 6.6×10⁶ | 5.5×10⁶ |
| Breaking stress(N/m²) | (50°C storage) | 2.4×10⁶ | 3.4×10⁶ | 5.1×10⁶ | 5.5×10⁶ | 4.6×10⁶ |
| Breaking stress retention rate (%) | | 44 | 61 | 91 | 83 | 84 |

| Liquid condiment | | | | | | |
|---|---|---|---|---|---|---|
| Amount of fiber (% by mass) | | 1.2 | 1.2 | 1.2 | 1.2 | 0 |

| <Sensory evaluation results> | | | | | | |
|---|---|---|---|---|---|---|
| Solid ingredient texture (immediately after preparation) | | 5 | 5 | 5 | 5 | 2 |
| Solid ingredient texture (after storage at 50°C for 4 days) | | 3 | 4 | 5 | 5 | 2 |
| A sense of eating a solid ingredient | | 3 | 4 | 4 | 4 | 2 |

From Table 4, Examples 9 to 12 were adjusted to a particular calcium content by using one or more of a calcium-containing food and a food-derived calcium material, and in Examples 9 to 12, even after storage, little change was observed in the hardness of the solid ingredient, the texture was also extremely good like a fresh vegetable, and provide a sufficient realization of eating a solid.

### Comparative Example 9

A condiment was produced as in Example 3 by using carrot cut to a length of 30 mm, a width of 10 mm, and a thickness of 5 mm, instead of the carrot pieces cut into dices in Example 3. The results are shown in Table 4.

As a result, in Comparative Example 9 which did not contain a particular amount of the solid ingredient passing through a 3-mesh sieve and not passing through an 8-mesh sieve in a wet state and contained only the solid ingredient of large size, the condiment was resistant to crunching, the carrot pieces as the solid ingredient were felt hard, and the condiment did not impart integrated feeling as a condiment and was hard to eat. In addition, there were difficulty in pouring and difficulty in discharging from the container.

## Claims

1. A solid ingredient-containing liquid condiment comprising a vegetable as a solid ingredient immersed in seasoning liquid, wherein (1) the liquid condiment comprises a solid ingredient passing through a 3-mesh (3 openings per inch (2.54 cm)) sieve and not passing through an 8-mesh (8 openings per inch (2.54 cm)) sieve in an amount of from 10 to 55% by mass of a whole liquid condiment on a wet basis, (2) Brix of the seasoning liquid in the liquid condiment is from 1 to 40, (3) pH of the seasoning liquid in the liquid condiment is from 2 to 5, and (4) a calcium content in the seasoning liquid of the liquid condiment is from 0.05 to 0.25% by mass.

2. The solid ingredient-containing liquid condiment according to claim 1, wherein the amount of the solid ingredient is from 15 to 55 % by mass of a whole liquid condiment on a wet basis.

3. The solid ingredient-containing liquid condiment according to claim 1 or 2, wherein an acetic acid concentration of the seasoning liquid in the liquid condiment is from 0.05 to 2% by mass.

4. The solid ingredient-containing liquid condiment according to any one of claims 1 to 3, wherein the solid ingredient before being immersed in the seasoning liquid is a dry vegetable.

5. The solid ingredient-containing liquid condiment according to any one of claims 1 to 4, wherein the solid ingredient before being immersed in the seasoning liquid is a calcium-containing dry vegetable having a water content of 10% by mass or less.

6. The solid ingredient-containing liquid condiment according to any one of claims 1 to 5, comprising from 1 to 100% by mass of a leafy vegetable in the solid ingredient on a wet basis.

7. The solid ingredient-containing liquid condiment according to claim 6, wherein thickness of the leafy vegetable in the liquid condiment is from 0.5 to 6 mm.

8. The solid ingredient-containing liquid condiment according to claim 6 or 7, wherein the leafy vegetable is one or more selected from the group consisting of cabbage, Chinese cabbage, celery, and onion.

9. The solid ingredient-containing liquid condiment according to any one of claims 1 to 8, wherein an amount of fiber derived from the solid ingredient passing through a 3-mesh (3 openings per inch (2.54 cm)) sieve and not passing through an 8-mesh (8 openings per inch (2.54 cm)) sieve is from 0.1 to 8% by mass of the whole liquid condiment.

10. The solid ingredient-containing liquid condiment according to any one of claims 1 to 9, wherein breaking stress of the solid ingredient in the liquid condiment at temperature from 15°C to 25°C is from 1.4 × 10⁶ to 8 × 10⁶ N/m².

11. The solid ingredient-containing liquid condiment according to any one of claims 1 to 10, wherein a retention rate of breaking stress of the solid ingredient when the solid ingredient-containing liquid condiment is stored at 50°C for 4 days and then set at temperature from 15°C to 25°C, in relation to breaking stress of the solid ingredient when the solid ingredient-containing liquid condiment is stored at 5°C for 4 days and then set at temperature from 15°C to 25°C, is 30% or more.

12. A method for producing a solid ingredient-containing liquid condiment wherein a retention rate of breaking stress of a solid ingredient in the liquid condiment when the solid ingredient-containing liquid condiment is stored at 50°C for 4 days and then set at temperature from 15°C to 25°C in relation to breaking stress of the solid ingredient when the solid ingredient-containing liquid condiment is stored at 5°C for 4 days and then set at temperature from 15°C to 25°C is 30% or more, the method comprising immersing in seasoning liquid a solid ingredient comprising a vegetable passing through a 3-mesh (3 openings per inch (2.54 cm)) sieve and not passing through an 8-mesh (8 openings per inch (2.54 cm)) sieve such that an amount of the solid ingredient is from 10 to 55% by mass of a whole liquid condiment on a wet basis, and adjusting Brix to from 1 to 40, pH to from 2 to 5, and a calcium content of the seasoning liquid in the liquid condiment to from 0.05 to 0.25% by mass.

13. The method for producing a solid ingredient-containing liquid condiment according to claim 12, wherein a calcium salt is added to adjust the calcium content to from 0.05 to 0.25% by mass.

14. The method for producing a solid ingredient-containing liquid condiment according to claim 12, wherein one or more of a calcium-containing food and a food-derived calcium material are used to adjust the calcium content to from 0.05 to 0.25% by mass.

15. The method for producing a solid ingredient-containing liquid condiment according to claim 12, wherein one or more of defatted sesame, Hizikia fusiforme, seaweed powder, milk calcium, calcium-containing yeast, and calcium-containing lactic acid bacteria are used to adjust the calcium content to from 0.05 to 0.25% by mass.

16. The method for producing a solid ingredient-containing liquid condiment according to any one of claims 12 to 15, wherein the vegetable before being immersed in the seasoning liquid is a dry vegetable.

## Patentansprüche

1. Einen festen Inhaltsstoff enthaltendes Flüssigwürzmittel, umfassend eine Gemüsesorte als festen Inhaltsstoff, der in eine Würzflüssigkeit eingetaucht ist, wobei (1) das Flüssigwürzmittel einen festen Inhaltsstoff, der ein 3-Mesh- (3 Öffnungen pro Zoll (2,54 cm)) Sieb passiert und nicht durch ein 8-Mesh- (8 Öffnungen pro Zoll (2,54 cm)) Sieb passiert, in einer Menge von 10 bis 55 Massen-% eines Gesamtflüssigwürzmittels auf Nassbasis umfasst, (2) der Brix-Wert der Würzflüssigkeit in dem Flüssigwürzmittel 1 bis 40 beträgt, (3) der pH-Wert der Würzflüssigkeit in dem Flüssigwürzmittel 2 bis 5 beträgt und (4) ein Calciumgehalt in der Würzflüssigkeit des Flüssigwürzmittels 0,05 bis 0,25 Massen-% beträgt.

2. Einen festen Inhaltsstoff enthaltendes Flüssigwürzmittel nach Anspruch 1, wobei die Menge des festen Inhaltsstoffs 15 bis 55 Massen-% eines Gesamtflüssigwürzmittels auf Nassbasis beträgt.

3. Einen festen Inhaltsstoff enthaltendes Flüssigwürzmittel nach Anspruch 1 oder 2, wobei eine Essigsäurekonzentration der Würzflüssigkeit in dem Flüssigwürzmittel 0,05 bis 2 Massen-% beträgt.

4. Einen festen Inhaltsstoff enthaltendes Flüssigwürzmittel nach einem der Ansprüche 1 bis 3, wobei der feste Inhaltsstoff vor dem Eintauchen in die Würzflüssigkeit eine trockene Gemüsesorte ist.

5. Einen festen Inhaltsstoff enthaltendes Flüssigwürzmittel nach einem der Ansprüche 1 bis 4, wobei der feste Inhaltsstoff vor dem Eintauchen in die Würzflüssigkeit eine Calciumhältige trockene Gemüsesorte mit einem Wassergehalt von 10 Massen-% oder weniger ist.

6. Einen festen Inhaltsstoff enthaltendes Flüssigwürzmittel nach einem der Ansprüche 1 bis 5, umfassend 1 bis 100 Massen-% eines Blattgemüses in dem festen Inhaltsstoff auf Nassbasis.

7. Einen festen Inhaltsstoff enthaltendes Flüssigwürzmittel nach Anspruch 6, wobei die Dicke des Blattgemüses in dem Flüssigwürzmittel 0,5 bis 6 mm beträgt.

8. Einen festen Inhaltsstoff enthaltendes Flüssigwürzmittel nach Anspruch 6 oder 7, wobei das Blattgemüse eines oder mehrere ist, die aus der aus Kohl, Chinakohl, Sellerie und Zwiebel bestehenden Gruppe ausgewählt sind.

9. Einen festen Inhaltsstoff enthaltendes Flüssigwürzmittel nach einem der Ansprüche 1 bis 8, wobei eine Menge an Fasern, die von dem festen Inhaltsstoff abgeleitet sind, der ein 3-Mesh- (3 Öffnungen pro Zoll (2,54 cm)) Sieb passiert und nicht durch ein 8-Mesh- (8 Öffnungen pro Zoll (2,54 cm)) Sieb passiert, 0,1 bis 8 Massen-% des Gesamtflüssigwürzmittels beträgt.

10. Einen festen Inhaltsstoff enthaltendes Flüssigwürzmittel nach einem der Ansprüche 1 bis 9, wobei die Bruchspannung des festen Inhaltsstoffs in dem Flüssigwürzmittel bei einer Temperatur von 15 °C bis 25 °C 1,4 × 10⁶ bis 8 × 10⁶ N/m² beträgt.

11. Einen festen Inhaltsstoff enthaltendes Flüssigwürzmittel nach einem der Ansprüche 1 bis 10, wobei eine Retentionsrate der Bruchspannung in dem festen Inhaltsstoff, wenn das einen festen Inhaltsstoff enthaltende Flüssigwürzmittel 4 Tage lang bei 50 °C gelagert und dann auf eine Temperatur von 15 °C bis 25 °C gebracht wird, im Vergleich zu einer Bruchspannung des festen Inhaltsstoffs, wenn das einen festen Inhaltsstoff enthaltende Flüssigwürzmittel 4 Tage lang bei 5 °C gelagert und dann auf eine Temperatur von 15 °C bis 25 °C gebracht wird, 30 % oder mehr beträgt.

12. Verfahren zur Herstellung eines einen festen Inhaltsstoff enthaltenden Flüssigwürzmittels, wobei eine Retentionsrate der Bruchspannung eines festen Inhaltsstoffs in dem Flüssigwürzmittel, wenn das einen festen Inhaltsstoff enthaltende Flüssigwürzmittel 4 Tage lang bei 50 °C gelagert und dann auf eine Temperatur von 15 °C bis 25 °C gebracht wird, im Vergleich zu einer Bruchspannung des festen Inhaltsstoffs, wenn das einen festen Inhaltsstoff enthaltende Flüssigwürzmittel 4 Tage lang bei 5 °C gelagert und dann auf eine Temperatur von 15 °C bis 25 °C gebracht wird, 30 % oder mehr beträgt, wobei das Verfahren das Eintauchen eines festen Inhaltsstoffs, umfassend eine Gemüsesorte, der ein 3-Mesh- (3 Öffnungen pro Zoll (2,54 cm)) Sieb passiert und ein 8-Mesh- (8 Öffnungen pro Zoll (2,54 cm)) Sieb nicht passiert, in eine Würzflüssigkeit, sodass eine Menge des festen Inhaltsstoffs 10 bis 55 Massen-% eines Gesamtflüssigwürzmittels auf Nassbasis beträgt, und das Einstellen des Brix-Werts auf 1 bis 40, des pH-Werts auf 2 bis 5 und eines Calciumgehalts in der Würzflüssigkeit auf 0,05 bis 0,25 Massen-% umfasst.

13. Verfahren zur Herstellung eines einen festen Inhaltsstoff enthaltenden Flüssigwürzmittels nach Anspruch 12, wobei ein Calciumsalz zugesetzt wird, um den Calciumgehalt auf 0,05 bis 0,25 Massen-% einzustellen.

14. Verfahren zur Herstellung eines einen festen Inhaltsstoff enthaltenden Flüssigwürzmittels nach Anspruch 12, wobei eines oder mehrere aus einem Calcium-hältigen Nahrungsmittel und einem Nahrungsmittel-abgeleiteten Calciummaterial verwendet werden, um den Calciumgehalt auf 0,05 bis 0,25 Massen-% einzustellen.

15. Verfahren zur Herstellung eines einen festen Inhaltsstoff enthaltenden Flüssigwürzmittels nach Anspruch 12, wobei eines oder mehrere aus entfettetem Sesam, Hizikia fusiforme, Algenpulver, Milchcalcium, Calcium-hältiger Hefe und Calcium-hältigen Milchsäurebakterien verwendet werden, um den Calciumgehalt auf 0,05 bis 0,25 Massen-% einzustellen.

16. Verfahren zur Herstellung eines einen festen Inhaltsstoff enthaltenden Flüssigwürzmittels nach einem der Ansprüche 12 bis 15, wobei die Gemüsesorte vor dem Eintauchen in die Würzflüssigkeit eine trockene Gemüsesorte ist.

## Revendications

1. Condiment liquide contenant un ingrédient solide comprenant un légume en tant qu'ingrédient solide immergé dans un liquide d'assaisonnement, dans lequel (1) le condiment liquide comprend un ingrédient solide passant à travers un tamis de maille 3 (3 ouvertures par pouce (2,54 cm)) et ne passant pas à travers un tamis de maille 8 (8 ouvertures par pouce (2,54 cm)) en une quantité de 10 à 55 % en masse d'un condiment liquide entier sur une base humide, (2) le degré Brix du liquide d'assaisonnement dans le condiment liquide est de 1 à 40, (3) le pH du liquide d'assaisonnement dans le condiment liquide est de 2 à 5, et (4) une teneur en calcium dans le liquide d'assaisonnement du condiment liquide est de 0,05 à 0,25 % en masse.

2. Condiment liquide contenant un ingrédient solide selon la revendication 1, dans lequel la quantité de l'ingrédient solide est de 15 à 55 % en masse d'un condiment liquide entier sur une base humide.

3. Condiment liquide contenant un ingrédient solide selon la revendication 1 ou 2, dans lequel une concentration d'acide acétique du liquide d'assaisonnement dans le condiment liquide est de 0,05 à 2 % en masse.

4. Condiment liquide contenant un ingrédient solide selon l'une quelconque des revendications 1 à 3, dans lequel l'ingrédient solide, avant d'être immergé dans le liquide d'assaisonnement, est un légume sec.

5. Condiment liquide contenant un ingrédient solide selon l'une quelconque des revendications 1 à 4, dans lequel l'ingrédient solide, avant d'être immergé dans le liquide d'assaisonnement, est un légume sec contenant du calcium présentant une teneur en eau de 10 % en masse ou moins.

6. Condiment liquide contenant un ingrédient solide selon l'une quelconque des revendications 1 à 5, comprenant de 1 à 100 % en masse d'un légume à feuilles dans l'ingrédient solide sur une base humide.

7. Condiment liquide contenant un ingrédient solide selon la revendication 6, dans lequel l'épaisseur du légume à feuilles dans le condiment liquide est de 0,5 à 6 mm.

8. Condiment liquide contenant un ingrédient solide selon la revendication 6 ou 7, dans lequel le légume à feuilles est un ou plusieurs choisis dans le groupe constitué par le chou, le chou chinois, le céleri et l'oignon.

9. Condiment liquide contenant un ingrédient solide selon l'une quelconque des revendications 1 à 8, dans lequel une quantité de fibres dérivées de l'ingrédient solide passant à travers un tamis de maille 3 (3 ouvertures par pouce (2,54 cm)) et ne passant pas à travers un tamis de maille 8 (8 ouvertures par pouce (2,54 cm)) est de 0,1 à 8 % en masse de l'ensemble du condiment liquide.

10. Condiment liquide contenant un ingrédient solide selon l'une quelconque des revendications 1 à 9, dans lequel la contrainte à la rupture de l'ingrédient solide dans le condiment liquide à une température de 15°C à 25°C est de 1,4 × 10⁶ à 8 × 10⁶ N/m².

11. Condiment liquide contenant un ingrédient solide selon l'une quelconque des revendications 1 à 10, dans lequel un taux de rétention de contrainte à la rupture de l'ingrédient solide lorsque le condiment liquide contenant un ingrédient solide est stocké à 50°C pendant 4 jours, puis établi à une température de 15°C à 25°C, par rapport à la contrainte à la rupture de l'ingrédient solide lorsque le condiment liquide contenant un ingrédient solide est stocké à 5°C pendant 4 jours, puis établi à une température de 15°C à 25°C, est de 30 % ou plus.

12. Procédé de production d'un condiment liquide contenant un ingrédient solide dans lequel un taux de rétention de contrainte à la rupture d'un ingrédient solide dans le condiment liquide lorsque le condiment liquide contenant un ingrédient solide est stocké à 50°C pendant 4 jours, puis établie à une température de 15°C à 25°C, par rapport à la contrainte à la rupture de l'ingrédient solide lorsque le condiment liquide contenant un ingrédient solide est stocké à 5°C pendant 4 jours, puis établi à une température de 15°C à 25°C, est de 30 % ou plus, le procédé comprenant une immersion dans un liquide d'assaisonnement d'un ingrédient solide comprenant un légume passant à travers un tamis de maille 3 (3 ouvertures par pouce (2,54 cm)) et ne passant pas à travers un tamis de maille 8 (8 ouvertures par pouce (2,54 cm)), de telle sorte qu'une quantité de l'ingrédient solide est de 10 à 55 % en masse d'un condiment liquide entier sur une base humide, et un ajustement du degré Brix à 1 à 40, du pH de 2 à 5, et d'une teneur en calcium du liquide d'assaisonnement dans le condiment liquide à 0,05 à 0,25 % en masse.

13. Procédé de production d'un condiment liquide contenant un ingrédient solide selon la revendication 12, dans lequel un sel de calcium est ajouté pour ajuster la teneur en calcium de 0,05 à 0,25 % en masse.

14. Procédé de production d'un condiment liquide contenant un ingrédient solide selon la revendication 12, dans lequel un ou plusieurs parmi un aliment contenant du calcium et un matériau à base de calcium d'origine alimentaire sont utilisés pour ajuster la teneur en calcium de 0,05 à 0,25 % en masse.

15. Procédé de production d'un condiment liquide contenant un ingrédient solide selon la revendication 12, dans lequel un ou plusieurs parmi le sésame dégraissé, l'Hizikia fusiforme, la poudre d'algues, le calcium d'origine laitière, la levure contenant du calcium et les bactéries d'acide lactique contenant du calcium sont utilisés pour ajuster la teneur en calcium de 0,05 à 0,25 % en masse.

16. Procédé de production d'un condiment liquide contenant un ingrédient solide selon l'une quelconque des revendications 12 à 15, dans lequel le légume, avant d'être immergé dans le liquide d'assaisonnement, est un légume sec.
